# EUROPEAN PATENT APPLICATION

(11) **EP 2 387 270 A1**
(43) Date of publication of application: **16.11.2011**
(21) Application number: 10005028.5
(22) Date of filing: 12.05.2010
(51) Int. Cl.: H04W 36/00, H04W 36/30

(54) **Radio link failure recovery control in communication network having relay nodes**

(71) Applicant: Nokia Siemens Networks Oy, 02610 Espoo (FI)
(72) Inventor: Raaf, Bernhard, 82061 Neuried (DE); Redana, Simone, 81541 Munich (DE); Teyeb, Oumer, 11328 Stockholm (SE)
(74) Representative: Bruglachner, Thomas E.

(57) **Abstract**

There is proposed a mechanism for controlling a radio link failure recovery procedure in a communication network having relay nodes, wherein a network control node, such as a DeNB, forwards cached UE context information to a target network node which is contacted by an UE for re-establishment after radio link failure and requests, since it does not have the context information, the context information for the UE in question. Context information can also be proactively forwarded from the network control node to candidate neighboring network nodes when it is detected that a radio link failure between a relay node and the network control node, or between the relay node and a UE is possible.

## Description

### BACKGROUND OF THE INVENTION

### Field of the invention

The present invention relates to a method, apparatus and computer program product providing a mechanism for controlling a radio link failure recovery procedure in a communication network having relay nodes. In particular, the present invention is related to a mechanism providing functions for improving a recovery performance in a communication network when a radio link failure occurs in a link to a relay node as an extension of an access service subsystem.

### Related background Art

Prior art which is related to this technical field can e.g. be found by the technical specifications TR 36.806 (current version: 9.0.0), TS 36.300 (current version: 9.3.0), TR 36.814 (current version: 9.0.0), TS 36.423 (current version: 9.2.0) of the 3GPP.

The following meanings for the abbreviations used in this specification apply:
- 3GPP: - 3rd generation partnership project
- CN: - core network
- DeNB: - donor eNB
- DL: - downlink
- DRX: - discontinuous reception
- eNB: - enhanced node B (base station)
- EPS: - enhanced packet service
- EUTRAN: - enhanced UTRAN
- FDD: - frequency division duplexing
- IE: - information element
- IP: - Internet protocol
- L3: - layer 3
- LTE: - long term evolution
- MBSFN: - multi-cast broadcast single frequency network
- OFDM: - orthogonal frequency division multiplexing
- PDCCH: - physical download control channel
- QCI: - quality of service class
- QoS: - quality of service
- RAN: - radio access network
- RLF: - radio link failure
- RN: - relay node
- RRC: - radio resource control
- RS: - reference signal
- TDM: - time division multiplexing
- TOS: - type of service
- UE: - user equipment
- UL: - uplink
- Un: - interface between RN and DeNB
- UTRAN: - universal terrestrial RAN
- Uu: - interface between UE and RN or UE and DeNB

In the last years, an increasing extension of communication networks, e.g. of wire based communication networks, such as the Integrated Services Digital Network (ISDN), DSL, or wireless communication networks, such as the cdma2000 (code division multiple access) system, cellular 3rd generation (3G) communication networks like the Universal Mobile Telecommunications System (UMTS), enhanced communication networks based e.g. on LTE, cellular 2nd generation (2G) communication networks like the Global System for Mobile communications (GSM), the General Packet Radio System (GPRS), the Enhanced Data Rates for Global Evolutions (EDGE), or other wireless communication system, such as the Wireless Local Area Network (WLAN) or Worldwide Interoperability for Microwave Access (WiMAX), took place all over the world. Various organizations, such as the 3rd Generation Partnership Project (3GPP), Telecoms & Internet converged Services & Protocols for Advanced Networks (TISPAN), the International Telecommunication Union (ITU), 3rd Generation Partnership Project 2 (3GPP2), Internet Engineering Task Force (IETF), the IEEE (Institute of Electrical and Electronics Engineers), the WiMAX Forum and the like are working on standards for telecommunication network and access environments.

Generally, for properly establishing and handling a communication connection between network elements such as a UE and another communication equipment, such as a database, a server, etc., one or more intermediate network elements, such as network control nodes, support nodes, service nodes and interworking elements are involved which may belong to different communication networks.

One approach to further develop telecommunication networks is the installation of so-called relay nodes (RN).Relay Nodes (RNs) have been proposed as coverage extensions in cellular systems. Apart from this main goal of coverage extension, introducing relay concepts is also useful for providing a high-bit-rate coverage in high shadowing environment, for reducing average radio-transmission power at the UE, thereby leading to long battery life, for enhancing cell capacity and effective throughput (e.g. increasing cell-edge capacity and balancing cell load), and/or for enhancing overall performance and deployment cost of RAN.

Relay concepts are currently under studying or development in various network architectures, for example in LTE. Here, a so-called L3 RN, also known as Type I RN, has been taken as a baseline case and there are four candidate architectures under investigation for realizing L3 RNs. These architectures can be summarized into two categories:
In the first category (Category 1), a DeNB representing a control node for the RNs is not aware of individual UE EPS bearers. A UE EPS bearer can be considered as a virtual connection between the CN and the UE and can be characterized by different QoS parameters, and as such the traffic belonging to this bearer will be treated according to these parameters on the different nodes between gateways and the UE. That means that relayed UEs are hidden from the DeNB which is aware of only the RN.
In the second category (Category 2), on the other hand, the DeNB is aware of the individual UE EPS bearer of all the relayed UEs.

Generally, mapping of the UE EPS bearers to RN bearers (i.e. bearers defined between the RN and DeNB, also referred to as Un bearers) can be done either one-to-one (i.e. there is one Un bearer for each UE EPS bearer), or many-to-one (i.e. several UE EPS bearers are mapped into one Un bearer). The many-to-one mapping may be based on a mapping criteria such as the QoS requirements or may be done on a per UE basis (i.e. one Un bearer for all bearers of a given UE, regardless of QoS).

In the above mentioned Category 1 architectures, it is only possible to support many-to-one mapping, and specifically QoS based mapping (assuming the QoS mapping is done in a node before the DeNB through a marking of the IP headers TOS field, for example, in accordance with the a QoS parameter such as Quality of Service class identifier (QCI)).

On the other hand, in the above mentioned Category 2 architectures, it is possible to support both many-to-one (including per UE based mapping) and one-to-one mapping. Furthermore, the mapping may be done at the DeNB itself, as the UE EPS bearer's information is visible at the DeNB. Even if many-to-one mapping is used, a more appropriate mapping can be employed in Category 2 architectures as compared with Category 1 architectures, because all the QoS parameters (in addition to the QCI) can be used in the mapping process.

In the following, as an architecture underlying a communication network implementing examples of embodiments of the invention, it is therefore assumed that a Category 2 architecture is used as a relay architecture.

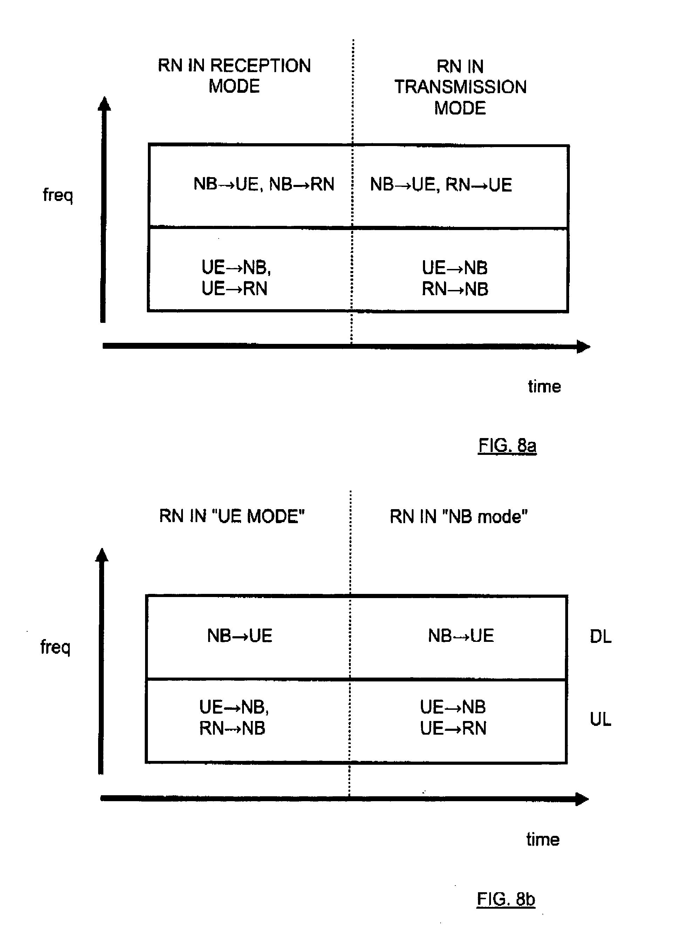

When being involved in a communication connection of an UE, a relay node has to operate four different links, also referred to as "quadruplex", rather than only two links (duplex) like a usual UE and base station (e.g. an eNBs in an LTE based network). The reason is that a RN has UL and DL connections to both eNB and UE in the same band. For frequency division duplex (FDD) systems an additional time division multiplexing (TDM) structure - for example on sub-frame basis - is promising as relaying protocol on layer 2, or on higher layers as it allows for orthogonal transmissions on the eNB-RN and RN-UE links (e.g. Uu and Un links). Such a measure is achievable by several means. In Figs. 8a and 8b, two examples are shown which concern quadruplex operation of a RN.

Specifically, in Fig. 8a, an example is illustrated where a switching of the RN between transmission and reception modes on a frequency and time basis is shown. On the other hand, also on a frequency and time basis, Fig. 8b shows an example where flip-flopping of the RN communication either to the NB (i.e. base station) or the UEs (but not simultaneously) is executed (i.e. a switching between UE and eNB modes). The basic operations of the examples shown in Figs. 8a and 8b are known to a person skilled in the art and thus not explained in detail herein. It is to be noted that Figs. 8a and 8b, NB→UE and UE→NB is related to direct connections of a UE to the base station (NB), while the other indications are related to relayed UEs.

When considering a scheme according to Fig. 8b, the RN provides UE functionality to the eNB in the one TDM sub-frame, and in the next sub-frame the RN provides eNB functionality. This sequence is repeated.

However, a direct application of the quadruplexing options such as the ones shown in Figs. 8a and 8b on for example an LTE sub-frame basis may be problematic. The reason is that it may disrupt channel estimation mechanisms implemented in LTE based networks which operate by sending scattered reference signals (RS). This is because either when the RN is in the reception mode (in the case of Fig. 8a) or in UE mode (in the case of Fig. 8b), it can not send RSs to the UE. However, in LTE, UEs may be configured to monitor the PDCCH for the RSs all the time, unless they are under Discontinuous Reception (DRX) sleep mode.

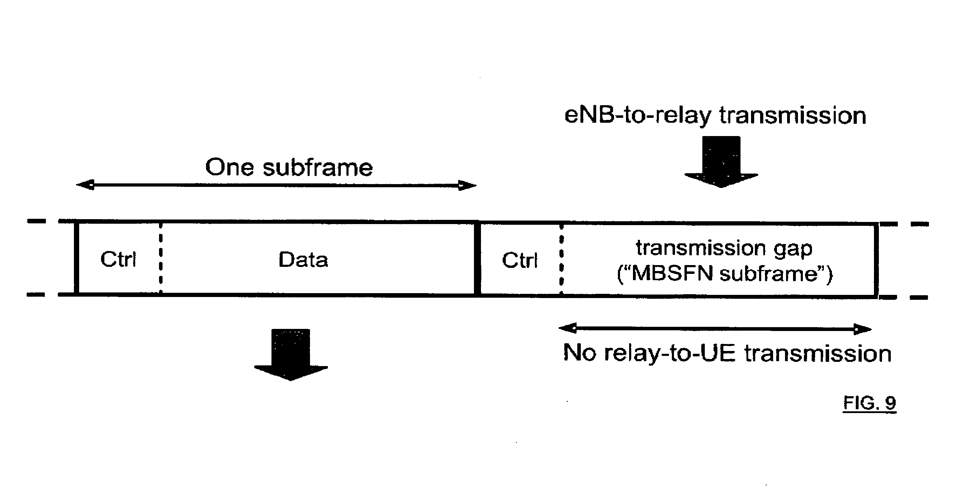

In order to avoid this problem, a solution has been proposed that is based on a specific frame structure according to a Multicast Broadcast Single Frequency Network (MBSFN) approach. This is illustrated in Fig. 9 which shows a relay-to-UE communication using normal subframes in the left half and eNB-to-relay communication using MBSFN subframes in the right half. Specifically, OFDM symbols that are specified for MBSFN are used to switch the RN into reception mode from the eNB, while UEs will assume that this is some MBSFN transmission with low power and not make any use of the signals transmitted there. Since this approach is known to those skilled in the art, a further detailed description thereof is omitted herein.

A split of resources between a DeNB-RN link (also referred to as the backhaul link, relay link or the Un link) and the RN-UE link (also referred to as the access link or the Uu link) may be done dynamically or semi dynamically, which may depend on the number of UEs connected to the DeNB and to the RNs. For example, if there are very few UEs connected to the RN, then having one subframe out of ten to be MBSFN sub frame may suffice (i.e. 1/10^{th} of the time, the RN will be disconnected from its UEs, and will receive DL data from the DeNB on their behalf). However, if there are many UEs per RN, and/or the aggregate relayed UE traffic is high, the MSBSFN sub frame reoccurrence can be increased to accommodate this.

A general problem to be dealt with in communication systems, in particular wireless communication systems such as LTE based networks, is a failure in the link between network elements. Such link failures comprise, for example a so-called Radio Link Failure (RLF). There are many situations which may cause RLF. For example, in an LTE based system, apart from sudden and persistent bad radio link conditions, RLF may be due to several factors, such as a handover failure (handover procedure is started, but the radio link between the source eNB and the UE deteriorates so fast that the UE is not able to receive the RRC reconfiguration message needed to start accessing the target eNB; it can also be that for some reason it was not possible to access the target eNB and synchronize with it), or when the UE leaves the service area (this may happen if an active UE leaves the service area of the serving cell suddenly; the probability of this happening is high if the UE is not active, because it can be in DRX mode (with a long DRX cycle) and travelling fast, and when it wakes up it can find itself outside the serving area of the source eNB).

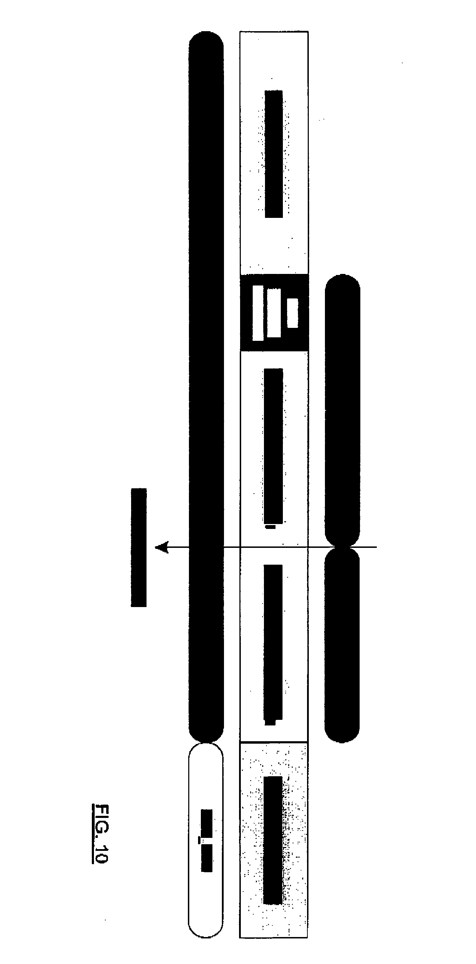

For dealing with the RLF problem, there have been developed several proposals, also in the LTE environment. For example, one proposal is related to a two-step approach which is illustrated in Fig. 10.

The main idea behind the two-step approach according to Fig. 10 is to avoid the UE from going into RRC_IDLE state during radio link failures since this would lead to a drop of all the active bearers. For this purpose, it is tried to re-establish the RRC connection either with the same cell or with a new cell (be it the source cell, another cell belonging to the source eNB, or even another cell belonging to another eNB). So the UE stays in RRC_CONNECTED state, and tries to access a cell through contention based random access procedure, where the UE identifier is used (a combination of relevant information such as the C-RNTI in the cell where the radio link failure occurred and the identity of that cell).

Example of possible operation scenarios based on the two-step approach are depicted in the following Table 1.

| **Cases** | **First Phase** | **Second Phase (T1 expired)** | **T2 expired** |
|---|---|---|---|
| UE returns to the same cell | Continue as if no radio problems oc-curred | Activity is re-sumed by means of explicit signal-ling between UE and eNB | Go via RRC_IDLE |
| UE selects a different cell from the same eNB | N/A | Activity is re-sumed by means of explicit signal-ling between UE and eNB | Go via RRC_IDLE |
| UE selects a cell of a pre-pared eNB (NOTE) | N/A | Activity is re-sumed by means of explicit signal-ling between UE and eNB | Go via RRC_IDLE |
| UE selects a cell of a different eNB that is not prepared (NOTE) | N/A | Go via RRC_IDLE | Go via RRC_IDLE |
| NOTE: a prepared eNB is an eNB which has admitted the UE during an earlier executed Handover preparation phase. | | | |

That means, in case the selected eNB finds a context that matches the identity of the UE requesting re-establishment, it indicates to the UE that its connection can be resumed. If no context is found, RRC connection is released (UE goes to RRC_IDLE) and UE has to establish a new RRC connection. However, in a network using relay nodes, RLF may happen either on the Uu (between the RN and UE) or Un (between the RN and the DeNB) links. Generally, a failure on the Uu link is detected by the UE while a failure on the Un is detected by the RN. The probability of a failure on the Un link is generally lower than that of a failure on the Uu link, in particular if the RNs in the network are stationary and installed in properly planned locations that provide a reliable radio link between them and their DeNBs.

However, it is necessary to provide suitable mechanisms which can be used for performing a recovery procedure in case of radio link failure on the Un link between RN and DeNB as well as the Uu link between the RN and the UEs, since several UEs can be affected due to the failure of one Un link.

One possible solution for providing such mechanisms, i.e. for dealing with RLF in a relay setting, is a direct application of existing procedures (e.g. based on Release 8 mechanisms) also for RLF on the Uu and Un links. However, results of a direct application are not optimal.

### SUMMARY OF THE INVENTION

Thus, it is an object of the invention to provide an apparatus, method and computer program product by means of which an improved mechanism for controlling a radio link failure recovery procedure in a communication network having relay nodes is provided. Specifically, it is an object of the invention to provide an apparatus, method and computer program product by means of which an RLF recovery in a communication network using a relay concept, such as a relay enhanced LTE-advanced network, is facilitated when an RLF in a link between a UE and an RN and/or in a link between a RN and a network control node (such as a DeNB) occurs.

These objects are achieved by the measures defined in the attached claims.

According to an example of the proposed solution, there is provided, for example, an apparatus comprising a first processing portion configured to store context information of user equipments connected to relay nodes controlled by the apparatus and/or a network control node connected to the apparatus, a receiver configured to receive a request from a network node requesting context information for a user equipment requesting a re-establishment of a communication connection, wherein the request is directed to a source node connected to the apparatus, a second processing portion configured to determine whether context information for the re-establishment requesting user equipment is stored, and in case the second processing portion determines that the context information for the re-establishment requesting user equipment is stored, a transmitter configured to send on behalf of the source node, the stored context information of the re-establishment requesting user equipment to the context requesting network node.

Furthermore, according to an example of the proposed solution, there is provided, for example, a method comprising storing context information of user equipments connected to relay nodes controlled by a network control node and/or connected to the network control node, receiving a request from a network node requesting context information for a user equipment requesting a re-establishment of a communication connection, wherein the request is directed to a source node connected to the network control node, determining whether context information for the requesting user equipment is stored, and in case it is determined that the context information for the requesting user equipment is stored, sending, on behalf of the source node, the stored context information for the requesting user equipment to the network node.

According to further refinements, there may be comprised one or'more of the following features:
- the request from the network node requesting context information for a user equipment requesting re-establishment of a communication connection may be received with a handover request message comprising an information element indicating a procedure code related to a request for transferring context information, and the stored context information for the requesting user equipment to the network node may be sent with a message responding to the handover request message, wherein the response message may comprise an information element indicating the procedure code related to the request for transferring context information;
- a timer value for user equipments and/or relay nodes controlled by the apparatus may be variably set, wherein the timer value may be related to a recovery processing conducted in case of a link failure, wherein a respective timer value may be set depending on at least one of a connection type and an expected connection condition to the respective user equipment and/or relay node.

Moreover, according to a further example of the proposed solution, there is provided, for example, an apparatus comprising a receiver configured to receive a request from a user equipment requesting a re-establishment of a communication connection, a determiner configured to determine whether context information of the requesting user equipment is present, a transmitter configured to send, in case the determiner determines that the context information is not present, a request message for requesting context information of the requesting user equipment, wherein the request message is directed to a source relay node and sent via a network control node controlling the source relay node, a receiver configured to receive a response message from a network control node, the response message comprising the context information of the requesting user equipment, and a fifth processing portion configured to perform an admittance procedure for admitting the requesting user equipment on the basis of the received context information of the requesting user equipment.

Furthermore, according to the further example of the proposed solution, there is provided, for example, a method comprising receiving a request from a user equipment requesting a re-establishment of a communication connection, determining whether context information of the requesting user equipment is present, sending, in case it is determined that the context information is not present, a request message for requesting context information of the requesting user equipment, wherein the request message is directed to a source relay node and sent via a network control node controlling the source relay node, receiving a response message from a network control node the response message comprising the context information of the requesting user equipment, and performing an admittance procedure for admitting the requesting user equipment on the basis of the received context information of the requesting user equipment.

According to further refinements, there may be comprised one or more of the following features:
- the response message may be received from one of a network control node controlling the source relay node, or another network control node associated to the apparatus;
- the request message for requesting context information of the requesting user equipment may be sent with a handover request message comprising an information element indicating a procedure code related to a request for transferring context information; additionally, the response message comprising the context information of the requesting user equipment may be received with a message responding to the handover request message, wherein the response message may comprise an information element indicating the procedure code related to the request for transferring context information;
- the functions may be implemented by at least one of a source node connected to the network control node, a relay node controlled by the network control node controlling the source node, a relay node controlled by another network control node being neighbored to the network control node controlling the source relay node, or a network control node being neighbored to the network control node controlling the source node.

Additionally, according to a further example of the proposed solution, there is provided, for example, an apparatus comprising a processing portion configured to determine whether a condition for proactively forwarding of stored context information of user equipments connected to relay nodes controlled by the apparatus and/or connected to a network control node connected to the apparatus towards candidate neighboring network elements is fulfilled, and in case the processing portion determines that the condition is fulfilled, a transmitter configured to send the stored context information of user equipments towards candidate neighboring network elements.

Furthermore, according to the further example of the proposed solution, there is provided, for example, a method comprising determining whether a condition for proactively forwarding of stored context information of user equipments connected to relay nodes controlled by a network control node towards candidate neighboring network elements is fulfilled, and in case it is determined that the condition is fulfilled, sending the stored context information of user equipments connected to relay nodes controlled by the network control node towards candidate neighboring network elements.

According to further refinements, there may be comprised one or more of the following features:
- the processing may determine that the condition is fulfilled on the basis of at least one of a detection result indicating whether a quality of a link to at least one of the relay nodes controlled by the apparatus degrades to a predetermined threshold or below, and a receipt of a forwarding request by a receiver from a relay node controlled by the apparatus, the forwarding request requesting forwarding of the stored context information of user equipments connected to this relay node;
- the stored context information of the user equipments may be sent towards the candidate neighboring network elements with a handover request message comprising an information element indicating a procedure code related to a preparation procedure for context information of user equipments, and the forwarding request from a relay node controlled by the apparatus may be received with a handover request message comprising an information element indicating a procedure code related to a preparation procedure for context information of user equipments.

- in a message used to send the stored context information of the user equipments towards the candidate neighboring network elements a priority indication may be introduced indicating one of a first priority stage indicating that the sent context information are to be stored in the receiving network node, a second priority stage indicating that an admittance processing of user equipments belonging to the sent context information is to be prepared in a specified time in the receiving network node, and a third priority stage indicating that an admittance processing of user equipments belonging to the sent context information is to executed immediately in the receiving network node;
- the functions may be implemented with previously defined functions, wherein the stored context information of user equipments is the context information stored by the first processing portion.

Furthermore, according to a further example of the proposed solution, there is provided, for example, an apparatus comprising a processing portion configured to determine whether a condition for proactively forwarding of context information of user equipments connected to the apparatus towards candidate neighboring network elements is fulfilled, and in case the processing portion determines that the condition is fulfilled, a transmitter configured to send a forwarding request to a network control node for requesting forwarding of context information of user equipments connected to the apparatus towards candidate neighboring network elements.

Furthermore, according to the further example of the proposed solution, there is provided, for example, a method comprising determining whether a condition for proactively forwarding of context information of connected user equipments towards candidate neighboring network elements is fulfilled, and in case it is determined that the condition is fulfilled, sending a forwarding request to a network control node for requesting forwarding of context information of user equipments connected to the apparatus towards candidate neighboring network elements.

According to further refinements, there may be comprised one or more of the following features:
- the processing may determine that the condition is fulfilled on the basis of a detection result indicating whether a quality of a link to at least one of user equipments connected to the apparatus degrades to a predetermined threshold or below;
- the forwarding request may be sent to the network control node with a handover request message comprising an information element indicating a procedure code related to a preparation procedure for context information of user equipments;
- the functions may be implemented with the functions defined above.

By virtue of the proposed solutions, it is possible to provide a mechanism for fast RLF recovery procedure in a communication network having relay nodes i.e. a fast re-establishment of a connection, where the failure occurs on the Uu link between the RN and the UE or the Un link between the RN and the DeNB. Furthermore, since the functions involved in the proposed mechanisms affect only the network nodes concerned with network control (e.g. the DeNB and the RN), the mechanism is compatible also with already existing system, for example with LTE release 8 UEs which will be able to benefit from it.

Specifically, according to the proposed mechanism, in contrast to existing solutions (such as a direct application of LTE release 8 RLF recovery where a complete setup of all the UE bearers from scratch would be necessary), it is possible to perform a recovery procedure which is comparable to a handover procedure of an UE to a target node. This mechanism includes the storing/caching of the context info by the DeNB and the forwarding thereof to the target node and accelerates the recovery procedure and does not (or at least less) affect the perceived QoS of the active bearers of the UE.

By forwarding of the UE context information by the DeNB of the source RN towards a target node that received for example a re-establishment request from that UE, not only the recovery due to bad radio conditions, but also in cases of hardware/software failures on the source RN is supported.

By proactively forwarding the context information of the RN (i.e. of UEs connected thereto) to candidate neighboring network elements, such as neighboring DeNBs, even before a radio link failure occurs (i.e. the possibility thereof is detected), the network control node controlling the respective RN (such as the DeNB) can further facilitate and accelerate a recovery procedure in case it becomes necessary. By means of a function that in case an RN detects a degrading of e.g. the Uu link of one of its UEs, it requests the controlling DeNB to forward the context information of that UE towards candidate neighbors for handing over the UE, a pre-handover action is implemented which supports a quick recovery in case the radio link deteriorates, for example, very fast so that a proper handover is not possible.

Furthermore, the proposed mechanism comprising a scheme of pre-forwarding UE context information enables that a handover is performed only when required, in particular in the context of RLF, and only at one cell, so that unnecessary resource reservations that might result in the rejection of the handover requests of other UEs are not required. Due to the caching of the context information at the network control node (DeNB), such context information can be retrieved also very fast.

Advantageously, the proactively forwarding of the context information does not require resources on air interfaces since backhaul resources can be used. As backhaul capacity is probably large e.g. in case fiber connections or the like are used to connect network control elements such as eNBs and/or DeNBs, undue burden of the system can be avoided. Thus, in case a re-establishment happens, it is possible to save time during the requesting and forwarding processes for the data from the source DeNB to the target DeNB, for example.

The above and still further objects, features and advantages of the invention will become more apparent upon referring to the description and the accompanying drawings.

### BRIEF DESCRIPTION OF THE DRAWINGS

Fig. 1 shows a diagram illustrating an example of a radio access network deployment comprising relay nodes in which examples of embodiments of the invention can be implemented.
Fig. 2 shows a flowchart showing a control procedure for an RLF recovery processing according to examples of embodiments of the invention.
Fig. 3 shows a flowchart showing a control procedure for proactively forwarding context information usable in an RLF recovery processing according to examples of embodiments of the invention.
Fig. 4 shows a flowchart showing a control procedure for an RLF recovery processing according to examples of embodiments of the invention.
Fig. 5 shows a flowchart showing a control procedure for proactively forwarding context information usable in an RLF recovery processing according to examples of embodiments of the invention.
Fig. 6 shows a block circuit diagram illustrating a configuration of a network control node usable in an RLF recovery processing according to examples of embodiments of the invention.
Fig. 7 shows a block circuit diagram illustrating a configuration of a network node usable in an RLF recovery processing according to examples of embodiments of the invention.
Figs. 8a and 8b show diagrams explaining a quadruplex operation of relay nodes.
Fig. 9 shows a diagram illustrating an example of a relay-to-UE communication using normal subframes and eNB-to-relay communication using MBSFN subframes.
Fig. 10 shows a diagram illustrating a two-step approach usable for handling a radio link failure processing.

### DESCRIPTION OF PREFERRED EMBODIMENTS

In the following, examples and embodiments of the present invention are described with reference to the drawings. For illustrating the present invention, the examples and embodiments will be described in connection with a communication system which may be based on a 3GPP LTE-advanced system where one or more relay nodes are used as extensions of the access network subsystems in the cells. However, it is to be noted that the present invention is not limited to an application in such a system or environment but is also applicable in other communication systems, connection types and the like.

A basic system architecture of a communication network may comprise a commonly known architecture comprising a wired or wireless access network subsystem and a core network. Such an architecture comprises one or more access network control units, radio access network elements, access service network gateways or base transceiver stations, with which a UE is capable to communicate via one or more channels for transmitting several types of data. Furthermore, core network elements such as gateway network elements, authentication/authorization/accounting network elements, home subscriber system network elements, policy and charging control network elements and the like are usually comprised. The general functions and interconnections of these elements are known to those skilled in the art and described in corresponding specifications so that a detailed description thereof is omitted herein. However, it is to be noted that several additional network elements and signaling links may be employed for a communication connection or a call between UEs and/or servers than those described in detail herein below.

Furthermore, the described network elements, such as network control nodes like base stations, eNBs, DeNBs etc., UEs and the like, and their functions described herein may be implemented by software, e.g. by a computer program product for a computer, or by hardware. In any case, for executing their respective functions, correspondingly used devices and network element may comprise several means and components (not shown) which are required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user (e.g. a screen, a keyboard and the like), interface means for establishing links and/or connections under the control of the processor unit (e.g. wired and wireless interface means, an antenna, etc.) and the like.

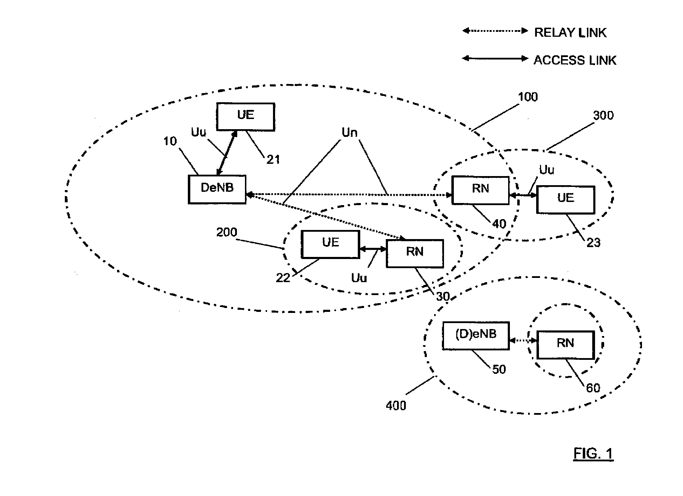

In Fig. 1, a simplified architecture of an exemplary communication network is shown where examples of embodiments of the invention are implementable. Specifically, Fig. 1 shows a deployment scenario of an LTE RAN with possible radio relayed extensions, implemented by means of RNs. As indicated above, such relay node extensions are used, for example, when it is expected that UEs are at disadvantaged positions such as cell edge and high shadowing areas, wherein the UEs are connected via the RN to the network through a DeNB controlling the RNs.

It is to be noted that the network architecture shown in Fig. 1 depicts only those network elements which are useful for understanding the principles of the examples of embodiments of the invention. As known by those skilled in the art there are several other network elements involved in the establishment, control and management of a communication connection which are omitted here for the sake of simplicity.

Furthermore, with regard to links or interfaces between the network elements shown in Fig. 1, the indications provided in Fig. 1 represent only examples for such links. Other definitions or links providing similar functionality may be also used.

Referring to Fig. 1, reference sign 10 denotes a network control node, for example a DeNB, controlling relay nodes implemented in the network system of Fig. 1. The DeNB 10 is a base transceiver station, such as an eNB, providing an access point for a set of macro cell 100 indicated by a dashed circle. The DeNB 10 controls a communication via a relay node (described below) towards the core network, for example via a gateway node (not shown). It is to be noted that there may be also provided "normal" eNB functions, i.e. an alternative entry point for a UE.

Reference signs 30 and 40 denotes relay nodes (RN) forming a respective micro cell 200, 300 as extended or supporting access points for a UE. The RNs 30 and 40 are connected to the DeNB 10 via a link corresponding, for example, to the Un link described above.

Reference signs 21, 22 and 23 denote user equipments being at different locations in the network. For example, UE 21 is a user equipment being connected directly to the DeNB (i.e. a eNB function thereof) as it is located in the macro cell 100 at a suitable location. UE 22, on the other hand, is connected to the DeNB via RN 22 as it is placed, for example in an area with deteriorated connection quality to the DeNB 10 or in an area with usually increased load (hot-spot). UE 23, on the other hand, may be a user equipment being located on the edge of the macro cell 100 so that it is connected in micro cell 300 with the RN 40. Links between the UEs 21, 22 and 23 to the respective network node (RN 30, 40, DeNB 10) are represented by a corresponding Uu link described above.

Reference sign 400 denotes a neighboring macro cell controlled by a corresponding network control node or DeNB 50 (referred to hereinafter also as candidate neighboring network node). The macro cell 400 may comprise additional micro cells which are controlled by a corresponding RN, such as RN 60 (similar to the configuration of the macro cell 100). A backhaul connection between the network control nodes of macro cells 100 and 400, i.e. between DeNB 10 and DeNB 50, may be provided by means of corresponding interfaces (not shown), such as an X2 interface or the like.

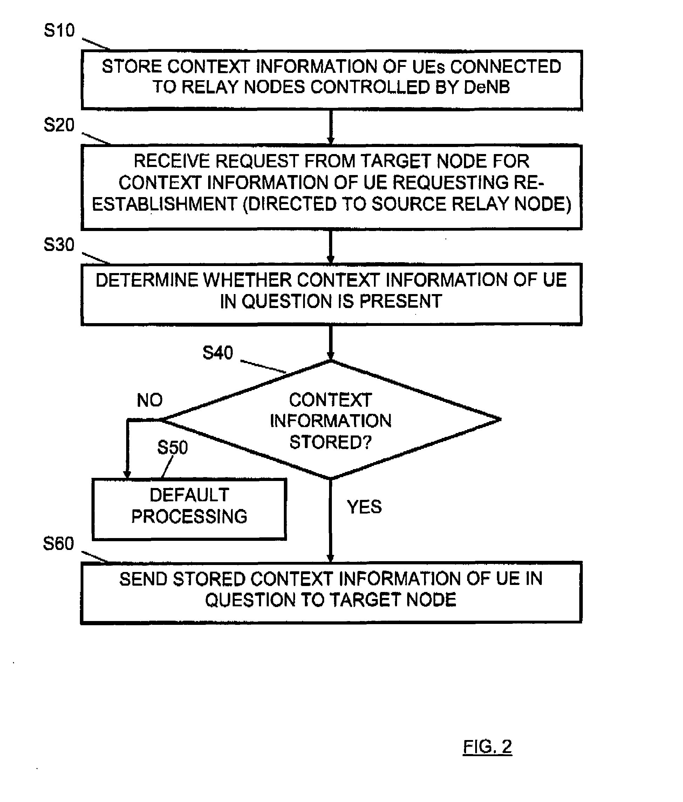

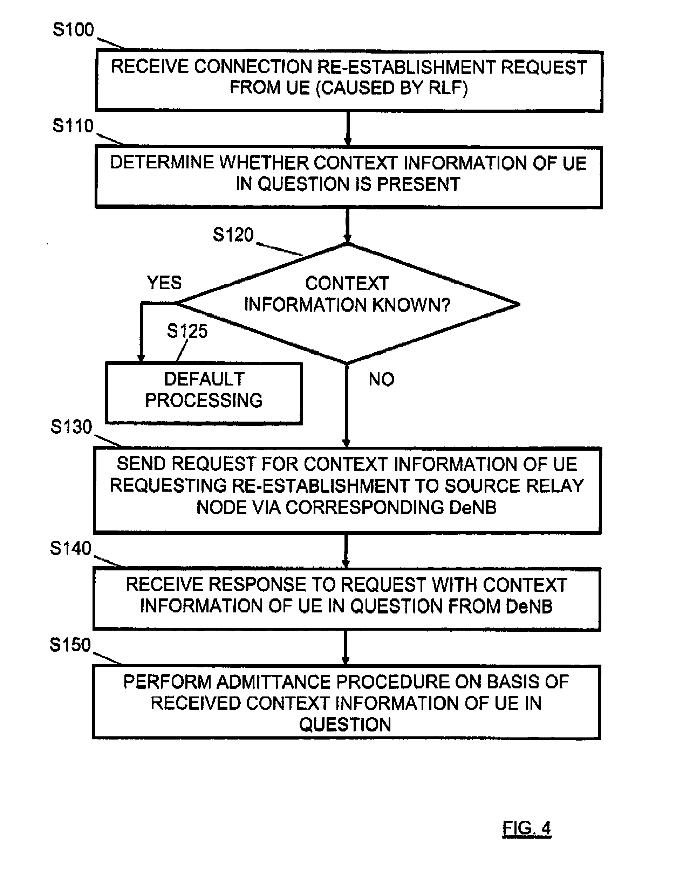

In the following, an example of an embodiment of the invention regarding a mechanism for controlling a radio link failure recovery procedure in a communication network as shown in Fig. 1 is described with reference to flow charts according to Figs. 2 and 4. Specifically, Fig. 2 shows a control procedure in an RLF recovery processing according to examples of embodiments of the invention performed by a network control node such as the DeNB 10, while Fig. 4 shows a control procedure in an RLF recovery processing according to examples of embodiments of the invention performed by a network node being a target node for a re-establishment for a UE connection. In this connection, it is to be noted that the target node for the re-establishment may be an RN controlled by the same DeNB 10, the DeNB 10 itself, an RN controlled by another DeNB, such as RN 60, or another (D)eNB, such as (D)eNB 50.

Generally, according to examples of the present invention, mechanisms are provided which improve the RLF recovery process, both on the Uu and Un links, by using the feature that the UE context information is available at the DeNB 10 (also referred to as source DeNB which controls the connection of the UE in question). That is, the DeNB 10 acts like a caching point for the UE context information, and when an RLF occurs and is detected, the cache is used to distribute the context information towards a target node, i.e. candidate neighbor nodes depending on the link where the RLF occurs.

Specifically, according to examples of the present invention, when an RLF occurs on the Uu link, the UE tries to recover the connection by sending the UE information towards a new target access node in a contention based random access signaling, as discussed above. Conventionally, when using for example only the mechanisms as described in LTE release 8, if the node that receives this re-establishment request is neither the original node the UE was connected to nor a prepared node where the UE context is already available, the UE has to go via RRC_IDLE to re-establish the connection. As a consequence, all the bearers of the UE have to be re-established, which considerably affects the user experience, especially if some of the bearers were carrying delay sensitive real time traffic.

Thus, according to examples of the present invention, when an RLF occurs on the Uu link, e.g. between UE 23 and RN 40, and the UE 23 tries to recover the connection by sending the UE information towards a new target access node (e.g. RN 30, RN 60 or DeNB 50) by means of a re-establishment request, e.g. by a contention based random access signaling, the target node (for example another RN) that receives the re-establishment request sends, when it does not have the UE context (i.e. it is not "prepared for the UE"), a request to the source RN 40 for the UE context information. This information request has to be passed via the DeNB controlling the source RN 40, i.e. DeNB 10. The DeNB 10, upon detecting this request, determines the UE context information that is previously stored or cached, and sends the required UE context information directly to the target node (e.g. RN 60). The target node can then, based on the detailed UE context sent to it by the DeNB 10, try to admit the UE 23 and its bearer (in a similar way as in a handover).

It is to be noted that the source node for the context information may be any node to which the UE is originally connected, i.e. an RN but also an eNB or the DeNB itself. According to examples of embodiments of the invention, the proposed mechanism is applied when context information are cached in the network control node, here the DeNB 10, for example.

Hence, while a direct application of LTE release 8 RLF recovery would have resulted in the setting up of all the UE bearers from scratch, according to examples of the present invention, the procedure will be as if the UE 23 is making a handover to the target node. Also, the caching and the forwarding of the context information by the DeNB 10 will make it more likely that the recovery will be done very fast without affecting the perceived QoS of the active bearers of the UE 23. This is because sending a message from the DeNB to its RN and sending the information back from the RN to the DeNB is avoided, which would be necessary if the information was not cached.

In the following, a corresponding example of an embodiment of the invention regarding a control procedure executed in the DeNB 10 for the above described RLF recovery procedure is described with reference to the flow chart according to Fig. 2.

In step S10, the context information of UEs (i.e. UEs 21, 22 and 23) controlled by the DeNB 10 also via RNs 30 and 40 are stored by the DeNB 10.

In step S20, the DeNB 10 receives a request from a network node, i.e. a target node such as RN 30, for requesting context information for a UE (e.g. UE 23) which requests at the target node a re-establishment of a communication connection due to RLF (i.e. RLF to original or source node like RN 40). This request is directed to RN 40 controlled by the DeNB 10 as a source RN.

In step 930, the DeNB 10 checks whether the requested context information for the re-establishment requesting UE 23 is present, i.e. stored for example in step S10.

If it is decided in step S40 that the determination in step S30 is negative, i.e. the context information of the UE in question is not stored, a default processing may be executed in step S50, for example by indicating to the target node that no context information are known, or by ignoring the request, or by forwarding the request to the indicated destination.

Otherwise, in case that it is decided in step S40 that the determination in step S30 is positive, i.e. the requested context information is present (e.g. stored in step 10), the stored context information for the UE in question is sent in step S60 to the target node. That is, the DeNB 10 responds on behalf of the source node, which can be an RN such as RN 30 or 40, another eNB connected to the DeNB, or the DeNB 10 itself.

It is to be noted that the processing of the DeNB 10 may also comprise functions to be executed when the DeNB 10 acts as a target node for a re-establishment of a connection of a UE (like a connection of UE 21). These functions may comprise a processing of requests/responses related to the transfer of the context information from another network control node and a processing related to the admittance of the requesting UE.

Next, a corresponding example of an embodiment of the invention regarding a control procedure executed in the target node for the above described RLF recovery procedure is described with reference to the flow chart according to Fig. 4. As indicated above, the target node may be one of an RN controlled by the same DeNB 10, the DeNB 10 itself, an RN controlled by another DeNB, such as RN 60, or another (D)eNB, such as DeNB 50.

In step S100, the target node (in the following it is assumed that the target node is RN 30) receives a request from UE 23 for requesting a re-establishment of a communication connection (caused by RLF with RN 40, for example)

In step S110, the RN 30 determines whether context information of UE 23 is present (i.e. if it is prepared for UE 23).

If it is determined in step S120 that context information of the requesting UE 23 are known, in step S125 a default processing is performed, e.g. an admittance or connection procedure for the requesting UE 23.

Otherwise, in case it is determined in step S120 that the context information is not present; the target node RN 40 sends a request message for requesting the context information of UE 23 to the source RN 40, i.e. via DeNB 10 (i.e. message received in step S20).

In step S140, the target node RN 30 receives a response message from the DeNB 10 comprising the context information of the UE 23.

Based on this received context information, in step S150, the RN 30 performs an admittance procedure for admitting the UE 23.

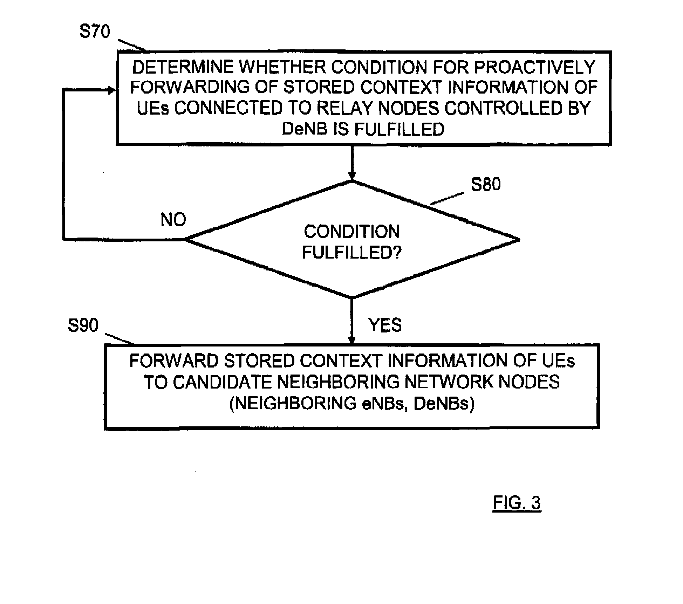

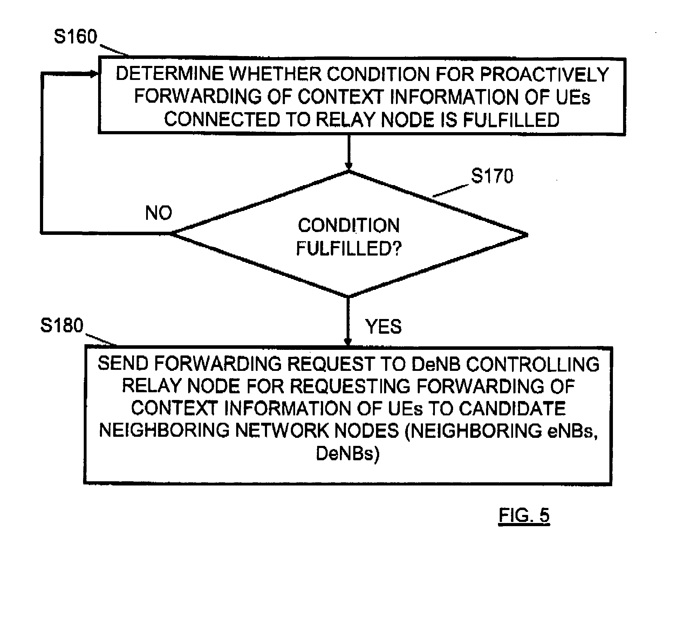

Next, a further example of an embodiment of the invention regarding a mechanism for controlling a radio link failure recovery procedure in a communication network as shown in Fig. 1 is described with reference to flow charts according to Figs. 3 and 5. Specifically, Fig. 3 shows a control procedure for proactively forwarding context information usable in an RLF recovery processing according to examples of embodiments of the invention performed by a network control node such as the DeNB 10, while Fig. 5 shows a control procedure for proactively forwarding context information usable in an RLF recovery processing according to examples of embodiments of the invention performed by a network node being a source node in the re-establishment procedure for an UE connection. In this connection, it is to be noted that the source node may be any RN controlled by the DeNB 10.

Specifically, according to examples of the present invention, when an RLF occurs on the Un link, the DeNB 10 is able to perform a processing which facilitates the recovery of UE connections affected by such an RLF. In detail, the DeNB 10 performs a processing for proactively forwarding context information of the RN where the RLF occurs, e.g. RN 40, to candidate neighboring network nodes, such as neighboring DeNBs like DeNB 50, even before a radio link failure is detected. For this purpose, when the DeNB 10 notices that the Un link quality is degrading very fast (for example in the case of mobile RNs), it proactively forwards stored context information to predetermined candidate neighboring cells which may become a candidate for a (mobile) RN or presently relayed UEs seeking for a re-establishment of connections.

It is to be noted that a similar processing is also advantageous with regard to Uu link related RLFs. For example, in case an RN such as RN 40 detects a possible problem on one or more of its Uu links to relayed UEs, e.g. when the RN 40 detects a degrading of the Uu link of one of its UEs, it may request a proactive forwarding of the context data of corresponding UEs from the controlling DeNB 10 towards candidate neighbors for handing over the UE. In other words, a pre-handover processing may be conducted just in case the radio link deteriorates very fast in such a way that a proper handover is impossible.

In the following, a corresponding example of an embodiment of the invention regarding a control procedure executed in the DeNB 10 for proactively forwarding of context information in the above described RLF recovery procedure is described with reference to the flow chart according to Fig. 3.

In step S70, it is determined by the DeNB 10 whether a condition for proactively forwarding of stored context information of UEs (or mobile RNs or the like) connected to an RN controlled by the DeNB towards candidate neighboring network elements is fulfilled. The condition may be, for example, a detection of a deterioration of a Un link, an detection of an increasing load at a specific RN, or a detection of a presence of a corresponding request from an RN.

If it is decided in step S80 that the condition is not fulfilled, the determination/decision sequence is repeated.

Otherwise, in case it is determined in step S80 that the condition is fulfilled, the DeNB 10 sends the stored context information (e.g. context information of UEs as stored in step S10) towards candidate neighboring network elements. The candidate neighboring network elements may be designated beforehand and comprise for example the DeNB 50.

Now, a further example of an embodiment of the invention regarding a control procedure executed in an RN, such as RN 40, as a source node for requesting proactively forwarding of context information in the above described RLF recovery procedure is described with reference to the flow chart according to Fig. 5.

In step S160, it is determined by the RN 40 whether a condition for proactively forwarding of context information of UEs connected to RN 40 towards candidate neighboring network elements is fulfilled. The condition may be, for example, a detection of a deterioration of a Uu link and the like.

If it is decided in step S170 that the condition is not fulfilled, the determination/decision sequence is repeated.

Otherwise, in case it is determined in step S170 that the condition is fulfilled, the RN 40 sends to the controlling DeNB 10 a corresponding forwarding request to request forwarding'of the context information (e.g. context information of UEs as stored in step S10) towards candidate neighboring network elements. The forwarding request may represent one condition of the determination in step S70.

Next, further examples of embodiments of the invention are described. It is to be noted that the following examples are based on the examples according to Figs. 2 to 5.

According to one further example of embodiments of the invention, the following is considered. In several communication networks, such as an LTE release 8, multiple handover preparations are allowed. That is, the source eNB is able to trigger a handover preparation procedure towards multiple targets by sending several handover request messages to the corresponding eNBs being listed for example in a handover candidate list. This way, in case one handover request fails, recovery is faster as one other or multiple other handover preparation is/are already ongoing towards other targets. When the handover procedure with one target is successful, the source eNB explicitly cancels the ongoing handover preparations with the other eNBs in the candidate list. Thus, multiple handover preparations can result in the UE/RN being admitted and resource reserved for it in multiple cells (until an explicit handover cancellation is received from the source node). According to an example of an embodiment of the invention, when conducting proactive forwarding of UE context information, a handover is performed only when required, specifically in the context of RLF, and only at one cell. Thus, unnecessary resource reservations that might otherwise result in the rejection of handover requests of other UEs are not made. Due to the caching at the DeNB, it is possible to retrieve this context information very fast.

According to a further example of embodiments of the invention, the forwarding of the UE context information by the DeNB of the source RN towards a target node that received a re-establishment request, as described in Fig. 2 for example, is used not only in a recovery procedure caused by bad radio conditions, but also in cases of hardware/software failures on the source RN.

According to another example of embodiments of the invention, the DeNB 10 may apply different settings for recovery related timers controlling the RLF recovery procedure. For example the DeNB 10 may set timers corresponding to one or both of times T1 and T2 shown in Fig. 10 (i.e. durations of first or second phase), depending on whether the connection to be considered by the DeNB 10 is one to an UE (e.g. UE 21) or an RN (e.g. RN 30, 40). For example, if the RNs are set up in such a manner that there is a very reliable radio link between them and the DeNB 10 (for example, line of sight links), occurrence of an RLF is more likely to happen due to other reasons than by improper radio conditions. Therefore, recovery via the timers T1, T2 is highly unlikely, so that it is advantageous to set the timers shorter in this case (for accelerating a possible recovery scenario). On the other hand, for example in case of an ad-hoc deployment or mobile relays, improper radio conditions might very likely be the cause of radio link failures. Thus it is useful to set the timers longer to facilitate a possible recovery.

According to a further example of embodiments of the invention, transmission of the (stored) context information to a target node may be done by using a modified handover request message. In a handover related signaling, such as in corresponding X2 messages, a *message type* Information Element (IE) can be included comprising values as depicted in the following table 2.

| **IE/Group Name** | **Presence** | **Range** | **IE type and reference** | **Semantics description** |
|---|---|---|---|---|
| Procedure Code | M | | INTEGER (0..255) | "0" = Handover Preparation "1" = Handover Cancel "2" = Load Indication "3" = Error Indication "4" = SN Status Transfer "5" = UE Context Release "6" = X2 Setup "7" = Reset "8" = eNB Configuration Update "9" = Resource Status Reporting Initiation "10" = Resource Status Reporting "11" = Private Message |
| Type of Message | M | | CHOICE (Initiating Message, Successful Outcome, Unsuccessful Outcome, ... ) | |

Conventionally, for a handover request, the *procedure code* indication is set to "handover preparation" (0) and the *type of message* indication is set to "Initiating Message". The procedure code is an integer field that can have 256 different values, but presently only 11 are specified. Thus, according to the present example of embodiments of the invention, a new code "UE Context Transfer Request", for example with a value of (12), is defined which is used when a target node requests for transferring UE context information (e.g. according to step S20 and S130). That is, when a target node gets an RRC re-establishment request and it does not have the context of the requesting UE, it sends this message with the type of message set to "Initiating message". The source DeNB, upon intercepting this message (e.g. according to step S20), sends the UE context information (e.g. according to step S60), along with the same procedure code (12), and "successful outcome" as the type of message. It is to be noted that the other IEs usually comprised in the handover request message can be used as is for transferring the context information, as a handover request contains detailed information about all the bearers of the UE to be admitted.

According to a further example of embodiments of the invention, a similar mechanism as described above with regard to the usage of a handover message comprising corresponding IEs may also be used with regard to the proactively forwarding of UE context information. For example, other procedure codes may be used for this purpose. Specifically, a DeNB or a RN requesting proactive forwarding may include a procedure code value of e.g. 13 (indicating e.g. "UE Context Preparation"), and send the rest of the handover request message as is. The node that receives this information (i.e. candidate neighboring network nodes) will not immediately perform a handover as in the reception of a normal handover request, but rather be ready to do so if an RRC re-establishment is received from a RN/UE after a while.

According to a further example of embodiments of the invention, different priorities can be set while forwarding the UE context information. When using for example a message as described in connection with table 2, additional codes may be defined, for example 14=high priority, 15=medium priority, 16=low priority, so that a DeNB/RN can indicate to the receiving node to act differently. For example, a low priority can mean not to do any admission and just wait for RRC re-establishment request or handover request; a medium priority can mean to do admission control within a certain time; and a high priority can mean to perform the admission immediately (i.e. equivalent to a normal handover request).

According to a further example of embodiments of the invention the caching of UE context information may be done not only at the source DeNB but proactively the information can also be forwarded to other DeNBs and cached there as well, but not to other RNs. This forwarding does not consume air interface resources but only backhaul resources, but backhaul capacity can be large if e.g. fibers or the like are used to connect DeNBs. Then, when a re-establishment is to be done, time may be saved for requesting and forwarding the data from the source DeNB to the target DeNB.

In the following, further examples of embodiments of the invention are described for explaining the effects achieved by implementing mechanisms for RLF recovery control as described above.

For example, regarding a RLF happening on the Uu link (between the UE and RN), when a UE that is connected via a RN detects an RLF on the Uu link (with the RN), then it tries to perform call re-establishment. This re-establishment can be:
A) with the same RN cell, if the RLF is recovered soon enough; then action according to specific examples of embodiments of the invention is not necessary;
B) with another RN cell that is controlled by the same DeNB; as described above, while conventionally the UE would have to go via the IDLE mode (meaning that it loses all its active bearers), according to examples of embodiments of the invention, the re-establishment is executed with the help of the DeNB, and since the DeNB already has the UE context, the UE does not go via the IDLE mode.
C) with the DeNB; while conventionally the UE would have to go via the IDLE mode (meaning that it loses all its active bearers), according to examples of embodiments of the invention, the context information is available already at the DeNB (but DeNB has not yet admitted the UE), so that UE handover can be performed on the DeNB based on the UE context information already available at the DeNB, avoiding the need to go to IDLE
D) with another eNB or another RN connected to another DeNB; the UE may possibly go through IDLE state, or a re-establishment is supported by proactive forwarding of context information to the other eNB/DeNB.

Thus, in summary, by means of context caching at the DeNB, the RRC re-establishment at RNs can be executed with the help of the DeNB, which makes it possible to make use of the knowledge of the already established bearers.

On the other hand, regarding RLF happening on the RN (between the RN and DeNB link), the following can be obtained. In case only fixed RNs are supported in the communication network, conventionally, if an RN has to change its DeNB because of RLF, the RN has to shut down the current Uu links and start the same procedure as in power up (which is expected to take considerable time as compared to RLF recovery timers). That is, all the UEs that were being served by the RN will lose their active connection, and have to re-connect with some cells they discover. Thus, the same situations as in cases B) and C) discussed above are present also in this scenario. In a scenario according to case D) discussed above, conventionally, all the UEs will be dropped which would represent a deteriorated system performance (as several UEs may be controlled by one RN). Thus, according to examples of embodiments of the invention, when the DeNB detects that the link with the RN is deteriorating and falls below a certain threshold, either from measurement reports that it is getting from the RN or also from other indicators such as the rate of acknowledgement reception for DL data, etc., the DeNB may push the context information of all UEs in question to the most likely neighbors of the RN (i.e. proactive forwarding processing). Relay node neighbors that are in the same cell as the RN being affected by the RLF are not informed further as the context is already cached at the DeNB controlling them. On the other hand, for relay node neighbors controlled by another DeNB, the source DeNB pushes the context information to the DeNB controlling the relay node neighbors, and for eNB neighbors, it pushes it to themselves. Hence, by using context pushing, it is possible to avoid a case that all relayed UEs are dropped in the case of RLF on the link between the RN and the DeNB.

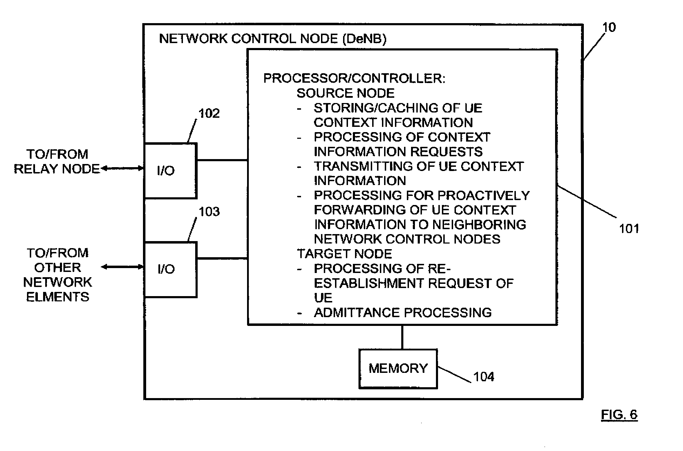

In Fig. 6, a block circuit diagram of a network control node such as a DeNB (e.g. DeNB 10) is shown which is configured to implement the RLF recovery control processing as described in connection with Fig. 2 or Fig. 3. It is to be noted that the DeNB 10 shown in Fig. 6 may comprise several further elements or functions besides those described in connection therewith but which are omitted herein for the sake of simplicity as they are not essential for understanding the invention.

The DeNB 10 may comprise a processing function or processor 101, such as a CPU or the like, which executes instructions given by programs or the like related to the power control. The processor 101 may comprise further portions dedicated to specific processings described below. Portions for executing such specific processings may be also provided as discrete elements or within one or more further processors, for example. Reference signs 102 and 103 denote transceiver or input/output (I/O) units connected to the processor 101. The I/O unit 102 may be used for communicating with controlled RNs (such as RN 30 and RN 40). The I/O unit 103 may be used for communicating with other network elements via corresponding interfaces, such as an X2 interface towards other eNBs. The I/O units 102 and 103 may be a combined unit comprising the communication equipment towards all network elements in question, or may comprise a distributed structure with a plurality of different interfaces. Reference sign 104 denotes a memory usable, for example, for storing data and programs to be executed by the processor 101 and/or as a working storage of the processor 101.

The processor 101 is configured to execute processings related to the RLF recovery control described in the above examples of embodiments of the invention. For example, the processor 101 is configured to store/cache UE context information, to process requests related to the transfer of the context information to a target node, and to conduct processings related to the proactive forwarding of context information, as described above.

It is to be noted that the processor 101 may also conduct, when the DeNB 10 acts as a target node for a re-establishment of a connection of a UE (like a connection of UE 21) processing of requests/responses related to the transfer of the context information from another network control node and to conduct processings related to the admittance of the requesting UE.

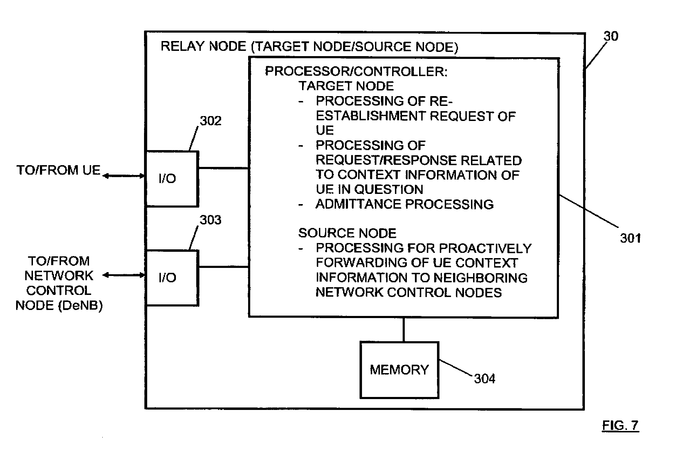

In Fig. 7, a block circuit diagram of a network node such as a RN (e.g. RN 30) is shown which is configured to implement the RLF recovery control processing as described in connection with Fig. 4 or Fig. 5. It is to be noted that the RN 30 shown in Fig. 7 may comprise several further elements or functions besides those described in connection therewith but which are omitted herein for the sake of simplicity as they are not essential for understanding the invention. Furthermore, it is to be noted that the network element shown in Fig. 7 comprises functions conducted by a target node and a source RN according to examples of embodiments of the invention as described above. As these functions may also work independently from each other or are part of a network element being different to the RN (e.g. another target node type like an eNB), corresponding functionality may be also provided separated from each other.

The RN 30 may comprise a processing function or processor 301, such as a CPU or the like, which executes instructions given by programs or the like related to the power control. The processor 301 may comprise further portions dedicated to specific processings described below. Portions for executing such specific processings may be also provided as discrete elements or within one or more further processors, for example. Reference signs 302 and 303 denote transceiver or input/output (I/O) units connected to the processor 301. The I/O unit 302 may be used for communicating with UEs (such as UE 22 or UE 23 requesting re-estabilishment). The I/O unit 303 may be used for communicating with the network control node, i.e. the DeNB 10. The I/O units 302 and 303 may be a combined unit comprising the communication equipment towards all network elements in question, or may comprise a distributed structure with a plurality of different interfaces. Reference sign 304 denotes a memory usable, for example, for storing data and programs to be executed by the processor 301 and/or as a working storage of the processor 301.

The processor 301 is configured to execute processings related to the RLF recovery control described in the above examples of embodiments of the invention, acting both as a target node and a source node. For example, the processor 301, acting as a target node, is configured to request UE context information of an unknown UE from another source node, to process requests/responses related to the transfer of the context information from a network control node, and to conduct processings related to the admittance of the requesting UE. On the other hand, when acting as a source node, the processor 301 is configured to conduct processings for proactively forwarding of context data, as described above.

With the mechanisms described in the above examples of embodiments of the invention, RLF recovery both on the Un and Uu links can be performed faster in a relay enhanced LTE-advanced network, wherein the mechanisms can also be implemented for UEs being not aware of this mechanism (e.g. UEs of an earlier release).

It is to be noted that the functions related to proactive forwarding of context information may be applied in network nodes also applying the functions related to the forwarding of the context information upon request from a target node, or may be separately applied in network nodes which are not applying the functions related to the forwarding of the context information upon request from a target node.

That is, according to examples of embodiments of the invention, there is provided an apparatus as defined in the attached claims 1 to 3, wherein the apparatus comprises in addition a fourth processing portion configured to determine whether a condition for proactively forwarding of stored context information of user equipments connected to relay nodes controlled by the apparatus towards candidate neighboring network elements is fulfilled, wherein in case the fourth processing portion determines that the condition is fulfilled, the transmitter is further configured to send the stored context information of user equipments connected to relay nodes controlled by the apparatus towards candidate neighboring network elements. In addition, the fourth processing portion may be further configured to determine that the condition is fulfilled on the basis of at least one of a detection result indicating whether a quality of a link to at least one of the relay nodes controlled by the apparatus degrades to a predetermined threshold or below, and a receipt of a forwarding request from a relay node controlled by the apparatus by the receiver, the forwarding request requesting forwarding of the stored context information of user equipments connected to this relay node. In this context, the transmitter is further configured to send the stored context information of the user equipments connected to relay nodes controlled by the apparatus towards the candidate neighboring network elements with a handover request message comprising an information element indicating a procedure code related to a preparation procedure for context information of user equipments, and the receiver is further configured to receive the forwarding request from a relay node controlled by the apparatus with a handover request message comprising an information element indicating a procedure code related to a preparation procedure for context information of user equipments. Moreover, the transmitter may be further configured to introduce in a message used to send the stored context information of the user equipments connected to relay nodes controlled by the apparatus towards the candidate neighboring network elements a priority indication indicating one of a first priority stage indicating that the sent context information are to be stored in the receiving network node, a second priority stage indicating that an admittance processing of user equipments belonging to the sent context information is to be prepared in a specified time in the receiving network node, and a third priority stage indicating that an admittance processing of user equipments belonging to the sent context information is to executed immediately in the receiving network node.

Regarding the method according to claim 4, the method may further comprise receiving the request from the network node requesting context information for a user equipment requesting re-establishment of a communication connection with a handover request message comprising an information element indicating a procedure code related to a request for transferring context information, and sending the stored context information for the requesting user equipment to the network node with a message responding to the handover request message, wherein the respond message comprises an information element indicating the procedure code related to the request for transferring context information. Furthermore, the method may comprise variably setting a timer value for user equipments and/or relay nodes controlled by the network control node, wherein the timer value is related to a recovery processing conducted in case of a link failure, wherein a respective timer value is set depending on at least one of a connection type and an expected connection condition to the respective user equipment and/or relay node. In addition, the method may further comprise determining whether a condition for proactively forwarding of stored context information of user equipments connected to relay nodes controlled by the network control node towards candidate neighboring network elements is fulfilled, and in case it is determined that the condition is fulfilled, sending the stored context information of user equipments connected to relay nodes controlled by the network control node towards candidate neighboring network elements. Furthermore, in the method, the determination that the condition is fulfilled may be based on at least one of a detection result indicating whether a quality of a link to at least one of the relay nodes controlled by the network control node degrades to a predetermined threshold or below, and a receipt of a forwarding request from a relay node controlled by the network control node, the forwarding request requesting forwarding of the stored context information of user equipments connected to this relay node. Additionally, the method may further comprise sending the stored context information of the user equipments connected to relay nodes controlled by the network control node towards the candidate neighboring network elements with a handover request message comprising an information element indicating a procedure code related to a preparation procedure for context information of user equipments, and receiving the forwarding request from a relay node controlled by the network control node with a handover request message comprising an information element indicating a procedure code related to a preparation procedure for context information of user equipments. Moreover, the method may further comprise introducing in a message used to send the stored context information of the user equipments connected to relay nodes controlled by the network control node towards the candidate neighboring network elements a priority indication indicating one of a first priority stage indicating that the sent context information are to be stored in the receiving network node, a second priority stage indicating that an admittance processing of user equipments belonging to the sent context information is to be prepared in a specified time in the receiving network node, and a third priority stage indicating that an admittance processing of user equipments belonging to the sent context information is to executed immediately in the receiving network node.

Regarding an apparatus according to any of claims 5 to 8, which is related to a target node processing, in case the target node is for example an RN or even an eNB connected to the DeNB, the apparatus may further perform an admittance procedure comprising an admittance of bearers of the requesting user equipment. Furthermore, the apparatus may further comprise a sixth processing portion configured to determine whether a condition for proactively forwarding of context information of user equipments connected to the apparatus towards candidate neighboring network elements is fulfilled, wherein in case the sixth processing portion determines that the condition is fulfilled, the transmitter is further configured to send a forwarding request to the network control node for requesting forwarding of stored context information of user equipments connected to the apparatus towards candidate neighboring network elements. Moreover, the sixth processing portion may be further configured to determine that the condition is fulfilled on the basis of a detection result indicating whether a quality of a link to at least one of user equipments connected to the apparatus degrades to a predetermined threshold or below. Furthermore, the transmitter is further configured to send the forwarding request to the network control node with a handover request message comprising an information element indicating a procedure code related to a preparation procedure for context information of user equipments.

Regarding the method according to claim 9, the method may further comprise receiving the response message from one of a network control node controlling the source relay node, or another network control node associated to the apparatus. Furthermore, the method may conduct an admittance procedure comprising an admittance of bearers of the requesting user equipment. Moreover, the method may further comprise sending the request message for requesting context information of the requesting user equipment with a handover request message comprising an information element indicating a procedure code related to a request for transferring context information, and receiving the response message comprising the context information of the requesting user equipment with a message responding to the handover request message, wherein the response message comprises an information element indicating the procedure code related to the request for transferring context information. Moreover, the method may further comprise determining whether a condition for proactively forwarding of context information of user equipments towards candidate neighboring network elements is fulfilled, and in case it is determined that the condition is fulfilled, sending a forwarding request to the network control node for requesting forwarding of stored context information of user equipments towards candidate neighboring network elements. Additionally, the method may comprise determining that the condition is fulfilled on the basis of a detection result indicating whether a quality of a link to at least one of connected user equipments degrades to a predetermined threshold or below. Additionally, the method may comprise sending the forwarding request to the network control node with a handover request message comprising an information element indicating a procedure code related to a preparation procedure for context information of user equipments. Furthermore, the method may be executed in at least one of a relay node controlled by the network control node controlling the source relay node, a relay node controlled by another network control node being neighbored to the network control node controlling the source relay node, or a network control node being neighbored to the network control node controlling the source relay node.

Furthermore, according to examples of embodiment of invention, there is provided, for example, a computer program product for a computer, comprising software code portions for performing the steps of the above defined methods, when said product is run on the computer. The computer program product may comprise a computer-readable medium on which said software code portions are stored. Furthermore, the computer program product may be directly loadable into the internal memory of the computer and/or transmittable via a network by means of at least one of upload, download and push procedures.

For the purpose of the present invention as described herein above, it should be noted that
- an access technology via which signaling is transferred to and from a network element or node may be any technology by means of which a node can access an access network (e.g. via a base station or generally an access node). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention implies also wired technologies, e.g. IP based access technologies like cable networks or fixed lines but also circuit switched access technologies; access technologies may be distinguishable in at least two categories or access domains such as packet switched and circuit switched, but the existence of more than two access domains does not impede the invention being applied thereto,
- usable access networks may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user or subscriber may experience services from an access network, such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules for it), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

As described above, there is proposed a mechanism for controlling a radio link failure recovery procedure in a communication network having relay nodes, wherein a network control node, such as a DeNB, forwards cached UE context information to a target network node which is contacted by an UE for re-establishment after radio link failure and requests, since it does not have the context information, the context information for the UE in question. Context information can also be proactively forwarded from the network control node to candidate neighboring network nodes when it is detected that a radio link failure between a relay node and the network control node, or between the relay node and a UE is possible.

Although the present invention has been described herein before with reference to particular embodiments thereof, the present invention is not limited thereto and various modifications can be made thereto.

## Claims

1. Apparatus comprising
a first processing portion configured to store context information of user equipments connected to relay nodes controlled by the apparatus and/or a network control node connected to the apparatus,
a receiver configured to receive a request from a network node requesting context information for a user equipment requesting a re-establishment of a communication connection, wherein the request is directed to a source node connected to the apparatus,
a second processing portion configured to determine whether context information for the re-establishment requesting user equipment is stored, and
in case the second processing portion determines that the context information for the re-establishment requesting user equipment is stored, a transmitter configured to send on behalf of the source node, the stored context information of the re-establishment requesting user equipment to the context requesting network node.

2. The apparatus according to claim 1, wherein
the receiver is further configured to receive the request from the network node requesting context information for a user equipment requesting re-establishment of a communication connection with a handover request message comprising an information element indicating a procedure code related to a request for transferring context information, and
the transmitter is further configured to send the stored context information for the requesting user equipment to the network node with a message responding to the handover request message, wherein the response message comprises an information element indicating the procedure code related to the request for transferring context information.

3. The apparatus according to claim 1 or 2, further comprising
a third processing portion configured to variably set a timer value for user equipments and/or relay nodes controlled by the apparatus, wherein the timer value is related to a recovery processing conducted in case of a link failure, wherein a respective timer value is set depending on at least one of a connection type and an expected connection condition to the respective user equipment and/or relay node.

4. Method comprising
storing context information of user equipments connected to relay nodes controlled by a network control node and/or connected to the network control node,
receiving a request from a network node requesting context information for a user equipment requesting a re-establishment of a communication connection, wherein the request is directed to a source node connected to the network control node,
determining whether context information for the requesting user equipment is stored, and
in case it is determined that the context information for the requesting user equipment is stored, sending, on behalf of the source node, the stored context information for the requesting user equipment to the network node.

5. Apparatus comprising
a receiver configured to receive a request from a user equipment requesting a re-establishment of a communication connection,
a determiner configured to determine whether context information of the requesting user equipment is present,
a transmitter configured to send, in case the determiner determines that the context information is not present, a request message for requesting context information of the requesting user equipment, wherein the request message is directed to a source relay node and sent via a network control node controlling the source relay node
a receiver configured to receive a response message from a network control node, the response message comprising the context information of the requesting user equipment, and
a fifth processing portion configured to perform an admittance procedure for admitting the requesting user equipment on the basis of the received context information of the requesting user equipment.

6. The apparatus according to claim 15, wherein the receiver is configured to receive the response message from one of a network control node controlling the source relay node, or another network control node associated to the apparatus.

7. The apparatus according to any of claims 5 to 6, wherein
the transmitter is further configured to send the request message for requesting context information of the requesting user equipment with a handover request message comprising an information element indicating a procedure code related to a request for transferring context information, and
the receiver is further configured to receive the response message comprising the context information of the requesting user equipment with a message responding to the handover request message, wherein the response message comprises an information element indicating the procedure code related to the request for transferring context information.

8. The apparatus according to any of claims 5 to 7, wherein the apparatus is comprised by at least one of a source node connected to the network control node, a relay node controlled by the network control node controlling the source node, a relay node controlled by another network control node being neighbored to the network control node controlling the source relay node, or a network control node being neighbored to the network control node controlling the source node.

9. Method comprising
receiving a request from a user equipment requesting a re-establishment of a communication connection,
determining whether context information of the requesting user equipment is present,
sending, in case it is determined that the context information is not present, a request message for requesting context information of the requesting user equipment, wherein the request message is directed to a source relay node and sent via a network control node controlling the source relay node
receiving a response message from a network control node the response message comprising the context information of the requesting user equipment, and
performing an admittance procedure for admitting the requesting user equipment on the basis of the received context information of the requesting user equipment.

10. An apparatus comprising
a processing portion configured to determine whether a condition for proactively forwarding of stored context information of user equipments connected to relay nodes controlled by the apparatus and/or connected to a network control node connected to the apparatus towards candidate neighboring network elements is fulfilled, and
in case the processing portion determines that the condition is fulfilled, a transmitter configured to send the stored context information of user equipments towards candidate neighboring network elements.

11. The apparatus according to claim 10, wherein the processing portion is further configured to determine that the condition is fulfilled on the basis of at least one of
a detection result indicating whether a quality of a link to at least one of the relay nodes controlled by the apparatus degrades to a predetermined threshold or below, and
a receipt of a forwarding request by a receiver from a relay node controlled by the apparatus, the forwarding request requesting forwarding of the stored context information of user equipments connected to this relay node.

12. The apparatus according to claim 11, wherein
the transmitter is further configured to send the stored context information of the user equipments towards the candidate neighboring network elements with a handover request message comprising an information element indicating a procedure code related to a preparation procedure for context information of user equipments, and
the receiver is further configured to receive the forwarding request from a relay node controlled by the apparatus with a handover request message comprising an information element indicating a procedure code related to a preparation procedure for context information of user equipments.

13. The apparatus according to any of claims 10 to 12, wherein
the transmitter is further configured to introduce in a message used to send the stored context information of the user equipments towards the candidate neighboring network elements a priority indication indicating one of a first priority stage indicating that the sent context information are to be stored in the receiving network node, a second priority stage indicating that an admittance processing of user equipments belonging to the sent context information is to be prepared in a specified time in the receiving network node, and a third priority stage indicating that an admittance processing of user equipments belonging to the sent context information is to executed immediately in the receiving network node.

14. The apparatus according to any of claims 10 to 13, wherein the apparatus is comprised in an apparatus according to any of claims 1 to 3, wherein the stored context information of user equipments is the context information stored by the first processing portion.

15. An apparatus comprising
a processing portion configured to determine whether a condition for proactively forwarding of context information of user equipments connected to the apparatus towards candidate neighboring network elements is fulfilled, and
in case the processing portion determines that the condition is fulfilled, a transmitter configured to send a forwarding request to a network control node for requesting forwarding of context information of user equipments connected to the apparatus towards candidate neighboring network elements.

16. The apparatus according to claim 15, wherein the processing portion is further configured to determine that the condition is fulfilled on the basis of a detection result indicating whether a quality of a link to at least one of user equipments connected to the apparatus degrades to a predetermined threshold or below.

17. The apparatus according to claim 15 or 16, wherein
the transmitter is further configured to send the forwarding request to the network control node with a handover request message comprising an information element indicating a procedure code related to a preparation procedure for context information of user equipments.

18. The apparatus according to any of claims 15 to 17, wherein the apparatus is comprised in an apparatus according to any of claims 5 to 8.

19. A method comprising
determining whether a condition for proactively forwarding of stored context information of user equipments connected to relay nodes controlled by a network control node towards candidate neighboring network elements is fulfilled, and
in case it is determined that the condition is fulfilled, sending the stored context information of user equipments connected to relay nodes controlled by the network control node towards candidate neighboring network elements.

20. A method comprising
determining whether a condition for proactively forwarding of context information of connected user equipments towards candidate neighboring network elements is fulfilled, and
in case it is determined that the condition is fulfilled, sending a forwarding request to a network control node for requesting forwarding of context information of user equipments connected to the apparatus towards candidate neighboring network elements.
